Europäisches Patentamt

(19) European Patent Office

Office européen des brevets

(11) Publication number: **0 067 407**
**A1**

(12) # EUROPEAN PATENT APPLICATION

(21) Application number: **82105030.9**

(22) Date of filing: **08.06.82**

(51) Int. Cl.³: **B 62 D 25/08**
**B 62 D 25/18, B 60 R 15/02**

(30) Priority: **12.06.81 JP 86315/81**

(43) Date of publication of application:
**22.12.82 Bulletin 82/51**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(72) Inventor: **Sogao, Kazuhiro**
**No. 2-21-4-436, Koma Oiso-machi, Naka-gun**
**Kanagawa Prefecture(JP)**

(74) Representative: **Patentanwälte TER MEER - MÜLLER -**
**STEINMEISTER**
**Triftstrasse 4**
**D-8000 München 22(DE)**

(54) Vehicle body with enclosed space for containing auxiliary devices.

(57) In a body construction of a motor vehicle having an engine room R, there is formed an enclosed space S near the engine room for safely receiving therein an auxiliary device or devices. The space S is enclosed by a hood ledge (14), a fender panel (12) and an elongate fender protector (28) which constitute a tire house (16) of the vehicle body.

*FIG.2*

EP 0 067 407 A1

0067407

DESCRIPTION

The present invention relates in general to a body construction of a motor vehicle, and more particularly to a vehicle body construction which is formed with an enclosed space for safely receiving therein an auxiliary device or devices.

Within an engine room of a motor vehicle, there are arranged a number of devices and parts, such as engine proper, engine cooling unit, power train unit, and electric parts. Nowadays, however, it is not easy to systematically and neatly arrange these devices and parts in the engine room because of the increasing number of other auxiliary devices such as environmental protection devices. When the engine room is closely and unsystematically packed with these devices, well ventilation is not achieved thereby causing a trouble of over heating of the engine. Further, over heated air in the engine room will shorten the lives of the temperature sensitive parts, such as plastic parts, arranged in the engine room.

- 2 -

One measure to solve this problem is to mount some of these parts at a portion other than the engine room.  However, this measure sometimes induces a problem of stain of them especially when they are located at an exposed position of the vehicle body.  Further, placing the metallic parts at such exposed position will induce a problem of quick rusting of them.

Therefore, it is an essential object of the present invention to propose a measure which can solve the above-mentioned problem.

It is an object of the present invention to provide a vehicle body construction which is formed with an enclosed space for safely receiving therein an auxiliary device or devices.

According to the present invention, there is provided a body construction of a motor vehicle which has an engine room.  The body construction comprises a hood ledge defining a side wall of the engine room; a fender panel jointed to the hood ledge to form a tire house therebetween, the fender panel being formed with a recess which defines the entrance of the tire house; and an elongate fender protector interposed between the hood ledge and the fender panel in a manner to form a ceiling of the tire house, the peripheral edge of the protector being entirely engaged with the neibouring parts to form an enclosed space which is enclosed by the hood ledge, the fender panel and the protector.

Other objects and advantages of the present invention will become clear from the following description when taken in conjunction with the accompanying drawings, in which:

Fig. 1 is a side view of a motor vehicle, showing a portion where an auxiliary device receiving enclosed space according to the present invention is formed;

Fig. 2 is a sectional view taken along the line II-II of Fig. 1;

Fig. 3 is a sectional view taken along the line III-III of Fig. 1; and

Fig. 4 is a partially illustrated perspective view of the enclosed space in which an auxiliary device is mounted.

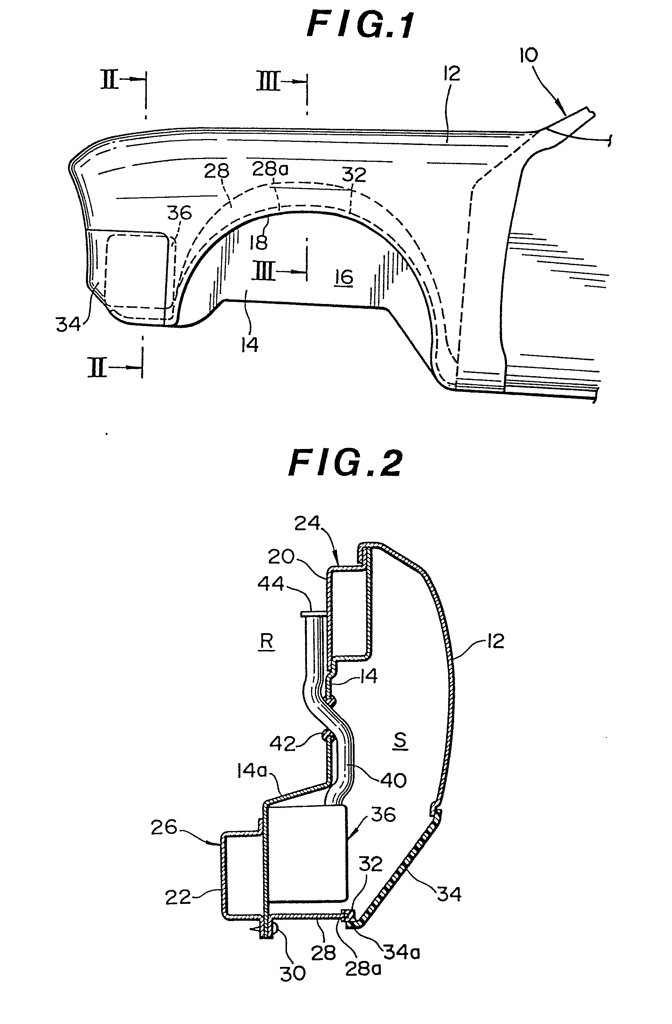

Referring to Figs. 1 to 3, particularly Fig. 1, there is shown a front portion of a motor vehicle 10 where an auxiliary device receiving enclosed space of the present invention is located.

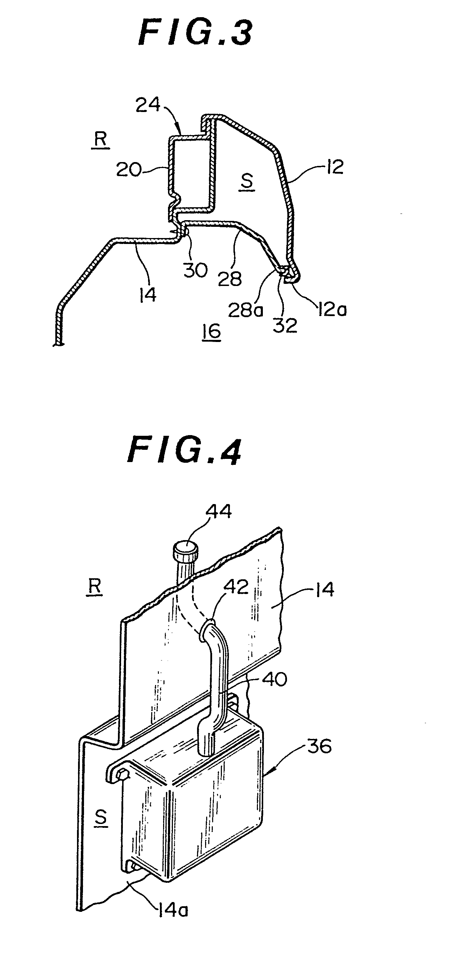

The front portion of the vehicle 10 shown comprises generally a front fender panel 12 and a hood ledge 14 which are joined at their upper portions to form a front tire house 16 therebetween, as is seen from Figs. 1 and 3. The front fender panel 12 is formed with an arched recess 18 which defines the entrance of the tire house 16. As is seen from Figs. 2 and 3, upper and lower elongate reinforcing members 20 and 22 extend in the fore-and-aft direction along the upper and lower portions of the hood ledge 14 and are respectively secured thereto to form respective box-shaped structures 24 and 26. As is shown by Fig. 2, the front portion 14a of the hood ledge 14 is bent inwardly to provide the after-mentioned enclosed space (S) with an enlarged section. This may become clear as the description proceeds.

An elongate fender protector 28 is arranged in the upper portion of the tire house 16 in a manner to extend curvedly along the arched periphery of the front fender recess 18. As is seen from Fig. 3, the inward side of the protector 28 is entirely engaged and secured to the hood ledge 14 by means of connecting screws 30 and the other or outward side of the same is also entirely engaged and secured to an inwardly bent flange portion 12a of the front fender panel 12. A seal strip 32 is snugly mounted on the peripheral edge 28a of the outward side of the protector 28 there- throughout to assure sealing between the outward edge 28a of the protector 28 and the flange portion 12a of the front fender panel 12. As is seen from Figs. 1 and 2, the fender protector 28 extends toward a front bumper 34 of the vehicle 10 and sealingly engages with the same through the seal strip 32.

With this arrangement, an enclosed space S is provided, which is defined by the front fender panel 12, the bumper 34, the fender protector 28, and the hood ledge 14. By its inherent construction, the enclosed space S extends in the fore-and-aft direction along the front fender panel 12 and has the largest and widest space at the front portion of the vehicle 10 by the reason as mentioned hereinbefore. If desired, the seal strip 32 may be mounted on not only the outward edge 28a of the fender protector 28, but also the inward side of the same to improve the hermetical isolation of the enclosed space S with respect to the vehicle surrounding. In the present invention, however, the enclosed space S does not require so high hermetical tightness so long as the enclosing construction can prevent waterdrops or the like, splashed by the running front tires, from directly entering the enclosed space S.

The enclosed space S thus formed is shown to receive therein a reservoir tank 36 of a windscreen washer system. As is seen from Figs. 2 and 4, the reservoir tank 36 is mounted in the before-mentioned enlarged section of the space S and is bolted to the inwardly recessed section 14a of the hood ledge 14. A water feed pipe 40 extends from the tank 36 and projects into the engine room R through an opening (no numeral) formed in the hood ledge 14. The opening is rimmed with a grommet 42. A lid 44 is removably connected to the mouth of the pipe 40. Of course, other auxiliary devices, such as electric devices, may be mounted in the space S instead of the tank 36.

Since the auxiliary device receiving space S is generally enclosed by the neighbouring parts, the auxiliary device or devices set in the space S can be protected from waterdrops splashed by the running front tires. The enclosed space S is suitable for receiving a poor heat resistant device because the space S is isolated from the engine room R.

## C L A I M S

1. A body construction of a motor vehicle having an engine room, comprising a hood ledge defining a side wall of said engine room, a fender panel joined to said hood ledge to form a tire house therebetween, said fender panel being formed with a recess which defines the entrance of said tire house, c h a r a c - t e r i z e d by an elongate fender protector (28) interposed between said hood ledge (14) and said fender panel (12) in a manner to form a ceiling of said tire house, the peripheral edge of said protector (28) being entirely engaged with the neighbouring parts to form an enclosed space (S) which is enclosed by said hood ledge (14), said fender panel (12) and said protector (28).

2. A body construction as claimed in claim 1, c h a - r a c t e r i z e d by a seal strip (32) interposed between said preipheral edge of said protector (28) and the associated parts to improve the hermetical isolation of said enclosed space (S) with respect to the surrounding of the vehicle.

3. A body construction as claimed in claim 1 or 2, c h a r a c t e r i z e d in that said hood ledge (14) is formed with a depressed portion to provide the inclosed space with an enlarged section.

4. A body construction as claimed in any of the above claims, c h a r a c t e r i z e d in that said fender protector (28) extends along the periphery of said recess (18) of the fender panel (12).

5. A body construction as claimed in any of the above claims, c h a r a c t e r i z e d in that said

elongate fender protector (28) extends toward a bumper (34) of the vehicle and sealingly engages with the same, said bumper (34) constituting part of the enclosing members by which said enclosed space θ is enclosed.

1/2

# FIG.1

# FIG.2

# FIG.3

# FIG.4

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 443 965 (LAINE)<br>* Whole document, in particular figure 2 * | 1,4 | B 62 D 25/08<br>B 62 D 25/18<br>B 60 R 15/02 |
| X | FR-A-2 450 190 (NISSAN)<br>* Page 3, line 28 * | 1,4 | |
| X | FR-A-2 450 735 (VAG)<br>* Whole document * | 1,4 | |
| X | US-A-3 338 617 (LOCKWOOD)<br><br>* Whole document, in particular claims 1,2 * | 1,2,4,5 | |
| X | FR-A-1 407 317 (AUTO UNION)<br>* Page 1, right-hand column, 2 last paragraphs; figure 2 * | 1,2,4 | TECHNICAL FIELDS SEARCHED (Int. Cl. ³) |
| A | US-A-2 807 496 (HOLLOWELL et al.)<br>* Figure 2 and description * | 1 | B 62 D |
| A | DE-U-7 530 300 (BEIGELBECK) | 1 | |

The present search report has been drawn up for all claims

| Place of search | Date of completion of the search | Examiner |
|---|---|---|
| THE HAGUE | 24-08-1982 | SCHMAL R. |